# EUROPÄISCHE PATENTSCHRIFT

(11) **EP 2 484 214 B1**
(45) Veröffentlichungstag und Bekanntmachung des Hinweises auf die Patenterteilung: **05.07.2017**
(21) Anmeldenummer: 12000655.6
(22) Anmeldetag: 01.02.2012
(51) Int. Cl.: A22C 17/12

(54) **Vorrichtung und Verfahren zum Abtragen einer Oberflächenschicht von Lebensmittelprodukten**
Method and device for removing a surface layer of food products
Dispositif et procédé d'enlèvement d'une couche de surface à partir de produits alimentaires

(30) Priorität: 02.02.2011 DE 102011010110
(43) Veröffentlichungstag der Anmeldung: 08.08.2012
(73) Patentinhaber: Weber Maschinenbau GmbH Breidenbach, 35236 Breidenbach (DE)
(72) Erfinder:
(74) Vertreter: Manitz Finsterwald Patentanwälte PartmbB

(56) Entgegenhaltungen:
- EP-A1- 0 411 743
- EP-A1- 2 210 494
- EP-A1- 2 210 495
- US-A- 6 129 625

## Beschreibung

Die vorliegende Erfindung betrifft eine Vorrichtung zum Abtragen einer Oberflächenschicht von Lebensmittelprodukten, mit einer Produktzuführung, die ein zu verarbeitendes Produkt entlang einer Produktförderrichtung derart einem Abtragungswerkzeug zuführt, dass das Produkt mit einer Komponente senkrecht zur Produktförderrichtung gegen eine Wirkfläche des Abtragungswerkzeugs gedrückt wird.

In der Lebensmittelindustrie werden derartige Vorrichtungen beispielsweise dazu eingesetzt, die Fettauflage und/oder die Schwarte eines Fleischprodukts vom Edelfleisch zu trennen. Je nach Einsatzzweck und Produktart werden zum Abtragen unterschiedliche Werkzeuge wie Walzen oder Messerklingen verwendet, welche quer zu der Produktförderrichtung gegen das sich bewegende Produkt gedrückt werden. Für eine korrekte Funktion einer derartigen Abtragungsvorrichtung ist es notwendig, dass der Druck des Abtragungswerkzeugs auf die Produktoberfläche während des gesamten Abtragungsvorgangs aufrechterhalten wird.

Bei herkömmlichen Abtragungsvorrichtungen sind daher Federeinrichtungen vorgesehen, um das Abtragungswerkzeug gegen die Produktoberfläche vorzuspannen. Hierbei besteht jedoch das Problem, dass die Federkraft von der Auslenkung der Federeinrichtung, also von der Position des Abtragungswerkzeugs relativ zu einer Grundstellung, abhängig ist und sich somit die Andruckkraft im Falle einer unregelmäßigen Produktdicke ändert. Dies kann dazu führen, dass die Abtragung der Oberflächenschicht nicht optimal verläuft.

Die Position des Abtragungswerkzeugs relativ zu der Produktzuführung kann mittels einer Stellvorrichtung verstellbar sein, wobei eine der Stellvorrichtung zugeordnete Steuereinheit dazu ausgebildet ist, die Position des Abtragungswerkzeugs relativ zu der Produktzuführung in Abhängigkeit von der Kontur des Produkts zu verstellen. Durch das aktive Verstellen der Relativposition zwischen der Produktzuführung - beispielsweise einer Produktauflagefläche - und des Abtragungswerkzeugs kann die Andruckkraft wunschgemäß verändert werden, da diese letztlich von dem Abstand zwischen der Wirkfläche des Abtragungswerkzeugs und der entsprechenden Gegenfläche, welche der Produktzuführung zugeordnet ist, abhängt. Es spielt dabei keine Rolle, ob zusätzlich auch noch eine Federeinrichtung zum Andrücken vorgesehen wird, welche durch den Stellvorgang in ihrer Auslenkung beeinflusst wird, oder ob die Relativposition zwischen dem Abtragungswerkzeug und der Produktzuführung abgesehen von dem Verstellvorgang fest ist und die Andruckkraft letztlich auf der Elastizität des Produkts beruht. Je nach Anwendung kann die Stellvorrichtung das Abtragungswerkzeug selbst oder aber eine entsprechende Gegenfläche der Produktzuführung bewegen. Die Verstellung der Relativposition kann auch dadurch erfolgen, dass sowohl das Abtragungswerkzeug als auch eine zugehörige Gegenfläche der Produktzuführung durch die Stellvorrichtung bewegt werden.

In der EP 2 210 495 A1 ist eine Vorrichtung zum Abtragen einer Fettschicht von einem Fleischstück offenbart, bei welcher die Produktauflage mittels Aktuatoren deformiert wird, um so den Verlauf der Trennschicht zwischen Fett und Edelfleisch an die Messerklinge anzupassen. Das Fleischprodukt befindet sich hierbei zwischen einer deformierbaren Auflagefläche und einer elastischen Andruckwalze. Zum Deformieren der Auflagefläche werden Stempel oder Rollen mittels geeigneter Aktuatoren verstellt.

Bei der in der US 6 129 625 A offenbarten Entschwartungsvorrichtung wird ein Fleischprodukt durch einen federbelasteten Bandförderer gegen die Produktauflagefläche gedrückt. Eine Schneidklinge wird mittels Aktuatoren in Abhängigkeit von der Dicke der Fettschicht gehoben und gesenkt. Die Fleischprodukte werden hierfür vor dem Entschwarten mittels eines Ultraschallsensors vermessen.

Die in der EP 2 210 494 A1 offenbarte Entschwartungsvorrichtung weist eine geteilte Klinge auf, wobei die Teile unabhängig voneinander verstellbar sind, um so mit dem Messer den Verlauf der Trennlinie zwischen Fett und Edelfleisch quer zu der Förderrichtung nachzubilden.

Bei der in der EP 0 411 743 A1 offenbarten Entfettungsvorrichtung drücken zwei Niederhalterbänder das Fleischprodukt gegen die Auflagefläche des Zuführungsförderers. Die Niederhalterbänder sind an einem Rahmen montiert, der beweglich gelagert und in Richtung des Fleischprodukts federvorgespannt ist. Das Entfettungsmesser wird mittels eines Hydraulikzylinders gehoben und gesenkt. Die dynamische Anpassung der Messerposition erfolgt hierbei anhand eines Kamerabilds.

Es ist eine Aufgabe der Erfindung, bei einer Vorrichtung der genannten Art auch für unregelmäßig dicke Produkte eine gleichmäßige Abtragung der Oberflächenschicht zu gewährleisten.

Die Lösung der Aufgabe erfolgt durch eine Vorrichtung mit den Merkmalen des Anspruchs 1.

Erfindungsgemäß ist die Steuereinheit dazu ausgebildet, eine Gegenfläche der Produktzuführung während des Abtragungsvorgangs fortlaufend der Kontur des Produkts nachzuführen. Mit anderen Worten führt die Stellvorrichtung die Gegenfläche während des Abtragungsvorgangs kontinuierlich an der Oberfläche des Produkts entlang. Die Gegenfläche folgt also nicht wie bei üblichen Abtragungsvorrichtungen passiv der Produktoberfläche, sondern wird aktiv an ihr entlang geführt. Auf diese Weise kann während des gesamten Abtragungsvorgangs eine gleichbleibende Andruckkraft und somit eine gleichbleibende Abtragungswirkung erzielt werden. Die Gegenfläche ist insbesondere an einer Andrückvorrichtung ausgebildet, z.B. einer Andrückwalze, die angetrieben und somit auch als Förderwalze dienen oder nicht angetrieben und frei drehbar sein kann.

Weiterbildungen der Erfindung sind in den abhängigen Ansprüchen, der Beschreibung sowie der beigefügten Zeichnung angegeben.

In einem Ausführungsbeispiel ist vorgesehen, dass die Relativposition zwischen einer Gegenfläche der Produktzuführung und dem Abtragungswerkzeug verstellbar ist.

Des Weiteren kann vorgesehen sein, dass die Gegenfläche an einer Andrückvorrichtung ausgebildet ist, wobei insbesondere die Andrückvorrichtung eine Andrückwalze umfasst.

Gemäß einer möglichen Ausgestaltung ist die Relativposition zwischen einer Andrückvorrichtung und einer Produktauflagefläche der Produktzuführung verstellbar. Dabei ist insbesondere das Abtragungswerkzeug in einer Ausnehmung oder Unterbrechung der Produktauflagefläche angeordnet.

Ferner kann vorgesehen sein, dass die Produktzuführung eine Andrückvorrichtung umfasst, die dazu ausgebildet ist, das Produkt gegen eine Produktauflagefläche der Produktzuführung zu drücken, wobei insbesondere das Abtragungswerkzeug in einer Ausnehmung oder Unterbrechung der Produktauflagefläche angeordnet ist.

Bevorzugt ist das Abtragungswerkzeug bezüglich der Verstellrichtung relativ zu einer Produktauflagefläche der Produktzuführung feststehend angeordnet. Dies ist aber nicht zwingend. Alternativ kann das Abtragungswerkzeug bezüglich der Produktauflagefläche verstellbar sein.

Gemäß einer Ausführungsform ist mittels der Stellvorrichtung der Abstand einer Gegenfläche der Produktzuführung und/oder der Wirkfläche des Abtragungswerkzeugs von einer Produktauflagefläche der Produktzuführung verstellbar. Bei der Produktauflagefläche kann es sich z.B. um die Oberfläche eines Bandförderers handeln, welcher gleichzeitig auch dem Produktvorschub dient. Alternativ könnte auch eine statische Produktauflagefläche vorgesehen sein.

Weiterhin kann eine mit der Steuereinheit in Verbindung stehende, insbesondere berührungslos arbeitende, Erfassungseinrichtung zum Ermitteln der Kontur des Produkts vorgesehen sein. Somit ist die Steuereinheit in der Lage, die Positionsverstellung anhand der konkret gemessenen Kontur des gerade zu verarbeitenden Produkts vorzunehmen, wodurch sich eine besonders exakte Nachführung einer Gegenfläche und/oder des Abtragungswerkzeugs erzielen lässt.

Die Erfassungseinrichtung kann wenigstens einen, insbesondere ultraschallbasierten, Abstandssensor umfassen. Hierdurch ist eine zuverlässige Ermittlung der Produktkontur möglich, ohne dabei in das Produkt einzustechen oder einzuschneiden oder es anderweitig zu beschädigen.

Eine berührungslose Abstandserfassung kann gemäß einer Ausgestaltung der Erfindung auf optischem Wege erfolgen. Beispielsweise kann eine optische Erfassungseinrichtung vorgesehen sein, die auf dem Triangulationsprinzip bzw. auf dem Lichtschnittverfahren beruht. Es kann insbesondere wenigstens ein Linienprojektor - vorzugsweise mit einem Laser als Lichtquelle - in Verbindung mit wenigstens einer Kamera zur Beobachtung der projizierten Linie auf dem Produkt eingesetzt werden, um so über den Linienversatz die Produktkontur zu ermitteln. Eine weitere Möglichkeit zur berührungslosen Konturerfassung ist die Verwendung eines Röntgenscanners, welcher in der Lage ist, die innere Struktur eines Produkts anhand von Dichteunterschieden zu ermitteln. Aus dieser umfassenden Strukturinformation kann der auf die Außenkontur bezogene Anteil extrahiert werden. Die Verwendung eines Röntgenscanners bietet sich insbesondere bei Anwendungen an, bei welchen die innere Struktur des Produkts - beispielsweise zum Einhalten eines exakten Produktportionsgewichts - ohnehin ermittelt werden muss.

Grundsätzlich ist es - gemäß einem unabhängigen Aspekt - auch denkbar, das Produkt, z.B. mittels einer Andruck- und/oder Förderwalze, von oben gegen eine Produktauflagefläche zu drücken, wobei eine in Abhängigkeit von der Kontur höhenverstellbare Messerklinge eine untere Oberflächenschicht des Produkts abträgt, während das Produkt in Richtung der Messerklinge gefördert wird.

Gemäß einer Ausführungsform tritt das Abtragungswerkzeug von unten mit der Produktoberfläche in Eingriff, um so eine untere Oberflächenschicht des Produkts abzutragen. In diesem Fall kann die Schwerkraft die Andruckkraft unterstützen oder sogar vollständig bereitstellen. Das Abtragungswerkzeug kann zu diesem Zweck in einer Ausnehmung oder Unterbrechung der entsprechenden Produktauflagefläche positioniert sein. Hierbei kann je nach Anwendung das untere Abtragungswerkzeug höhenverstellbar sein, oder eine obere Gegenfläche, z.B. ein Deckenabschnitt der Produktzuführung, kann bei feststehendem Abtragungswerkzeug in Abhängigkeit von der Produktkontur verstellt werden. Prinzipiell können erfindungsgemäß wenigstens zwei konturabhängig verstellbare Abtragungswerkzeuge vorgesehen sein, die an gegenüberliegenden Produktseiten wirksam sind.

Gemäß einer bevorzugten Ausführungsform umfasst das Abtragungswerkzeug ein Entfettungs-, Enthäutungs- und/oder ein Entschwartungswerkzeug. Durch Bereitstellen einer gleichmäßigen Andruckkraft ermöglicht die Erfindung ein besonders effektives Trennen der Schwarte und/oder der Fettauflage eines Fleischprodukts von dem darunterliegenden Edelfleischbestandteil.

Gemäß einer Ausführungsform umfasst das Abtragungswerkzeug wenigstens eine um eine quer zur Produktförderrichtung verlaufende Rotationsachse drehbare Walze. Bei einer derartigen Ausgestaltung wird beispielsweise ein Fleischprodukt dadurch entfettet, dass es durch eine Engstelle zwischen der drehbaren Walze und einer Auflagefläche eines Produktförderers hindurchgeführt wird. Die Andruckkraft, mit welcher die Walze gegen die Produktoberfläche drückt, ist dabei durch die Höhe der Engstelle vorgegeben. Durch Vergrößern dieser Höhe mittels einer Positionsverstellung der Walze kann die Andrückkraft bedarfsweise verringert werden. Die Walze kann eine Riffelung aufweisen, wie es auf dem Gebiet der Entfettungsmaschinen bekannt ist. Bei der Walze kann es sich alternativ um eine Andrückwalze handeln, die das Produkt gegen eine Produktauflagefläche drückt, in welcher das Abtragungswerkzeug angeordnet ist.

Gemäß einer bevorzugten Ausgestaltung umfasst das Abtragungswerkzeug wenigstens ein Messer oder eine Klinge, wobei insbesondere dem Messer bzw. der Klinge in Produktförderrichtung gesehen eine bevorzugt als Walze ausgebildete Fördereinrichtung vorgelagert ist.

Das Messer bzw. die Klinge ist bevorzugt in einer Unterbrechung oder Ausnehmung der Produktauflagefläche angeordnet, insbesondere zusammen mit der vorzugsweise als Zuführwalze ausgebildeten zusätzlichen Fördereinrichtung. Messer bzw. Klinge und Zuführwalze befinden sich folglich unterhalb des Produktes, und die Zuführwalze dient dazu, die abzutragende Oberflächenschicht der Schneide des Messers bzw. der Klinge sicher und zuverlässig zuzuführen. Das Messer bzw. die Klinge und gegebenenfalls auch die Zuführwalze können verstellbar sein, wobei allerdings vorzugsweise dies lediglich im Sinne einer für das jeweilige Produkt einmaligen Maschineneinstellung erfolgt und mit der produktkonturabhängigen Verstellung gemäß der Erfindung nichts zu hat.

Das Messer bzw. die Klinge kann mit einer Vorrichtung versehen sein, die dazu dient, die abgetrennte Oberflächenschicht, z.B. eine Schwarte, nach unten abzulenken, z.B. in ein Auffangbehältnis.

Vorzugsweise umfasst die Stellvorrichtung einen motorischen Stellantrieb. Hierdurch kann ein ausreichend schnelles und zuverlässiges Nachführen des Abtragungswerkzeugs und/oder einer Gegenfläche der Produktzuführung gewährleistet werden.

Der Stellantrieb kann insbesondere einen regelbaren Elektromotor umfassen, mittels welchem sich eine schnelle und exakte Positionsverstellung erzielen lässt.

Gemäß einer weiteren Ausführungsform der Erfindung ist eine Andrückvorrichtung der Produktzuführung und/oder das Abtragungswerkzeug an einem Schwenkarm angebracht, wobei durch ein Verschwenken des Schwenkarms mittels der Stellvorrichtung die Andrückvorrichtung und/oder das Abtragungswerkzeug gegenüber einer Produktauflagefläche der Produktzuführung hebbar und senkbar ist. Der Schwenkarm kann dabei einen Hebel zur Verstärkung der Stellkraft bilden.

Die Stellvorrichtung kann dazu ausgebildet sein, die Relativposition zwischen der Produktzuführung und dem Abtragungswerkzeug ferner in Abhängigkeit von einer Beschaffenheit des Produkts zu verstellen. Beispielsweise kann es wünschenswert sein, bei unterschiedlichen Produktarten verschiedene Andruckkräfte vorzugeben. Die Abtragungsqualität lässt sich somit weiter optimieren.

Allgemein kann das Abtragungswerkzeug relativ zu einer Auflagefläche oder Auflageebene für das Produkt oder relativ zu einer oberhalb der Auflagefläche befindlichen, z.B. an einer Andrückvorrichtung ausgebildeten Gegenfläche verstellt werden, wobei es keine Rolle spielt, ob das Abtragungswerkzeug, die Auflagefläche oder Gegenfläche oder beide Bauteile bewegt werden, d.h. es ist zum Beispiel auch möglich, die Auflagefläche oder die Gegenfläche in vertikaler Richtung konturabhängig zu verstellen und so das Produkt mittels der verstellbaren Auflagefläche oder Gegenfläche gegen ein in vertikaler Richtung feststehendes Abtragungswerkzeug zu drücken.

Die Erfindung betrifft weiterhin ein Verfahren zum Abtragen einer Oberflächenschicht von Lebensmittelprodukten gemäß Anspruch 12, wobei eine Kontur eines zu verarbeitenden Produkts ermittelt wird, das Produkt entlang einer Produktförderrichtung einem Abtragungswerkzeug derart zugeführt wird, dass das Produkt mit einer Komponente senkrecht zur Produktförderrichtung gegen eine Wirkfläche des Abtragungswerkzeugs gedrückt wird, und die Relativposition zwischen der Produktzuführung und dem Abtragungswerkzeug mittels einer Stellvorrichtung in Abhängigkeit von der ermittelten Kontur des Produkts verstellt wird.

Erfindungsgemäß wird eine Gegenfläche der Produktzuführung während des Abtragungsvorgangs fortlaufend der Kontur des Produkts nachgeführt.

Insbesondere kann die Position einer Andrückvorrichtung der Produktzuführung während des Abtragungsvorgangs der Kontur des Produkts nachgeführt werden.

Gemäß einer Ausführungsform wird die Kontur des gesamten Produkts vor dem Beginn des Abtragungsvorgangs ermittelt. Dies kann insbesondere dann vorteilhaft sein, wenn die Produktkontur ohnehin auch für andere Zwecke zu ermitteln ist.

Alternativ kann die Kontur des Produkts auch punkt- oder abschnittsweise während des Abtragungsvorgangs ermittelt werden. Eine derartige Konturerfassung "on the fly" kann für bestimmte Anwendungen vorteilhaft sein.

Die Erfindung wird nachfolgend beispielhaft unter Bezugnahme auf die Zeichnungen beschrieben.
- Fig. 1: zeigt eine vereinfachte Seitenansicht einer Vorrichtung zum Abtragen einer Oberflächenschicht von Lebensmittelprodukten gemäß einer ersten Ausführungsform der Erfindung.
- Fig. 1a: zeigt eine vereinfachte Seitenansicht einer Vorrichtung zum Abtragen einer Oberflächenschicht von Lebensmittelprodukten gemäß einer zweiten Ausführungsform der Erfindung.
- Fig. 2: zeigt eine vereinfachte Seitenansicht einer Vorrichtung zum Abtragen einer Oberflächenschicht von Lebensmittelprodukten gemäß einer dritten Ausführungsform der Erfindung.

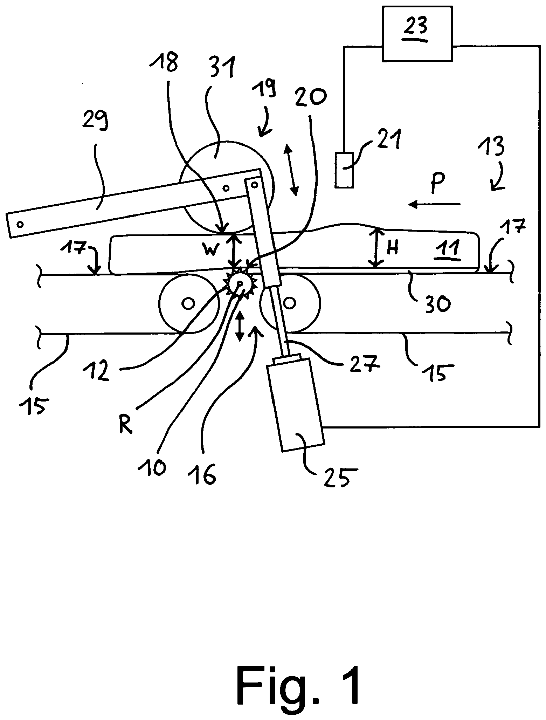

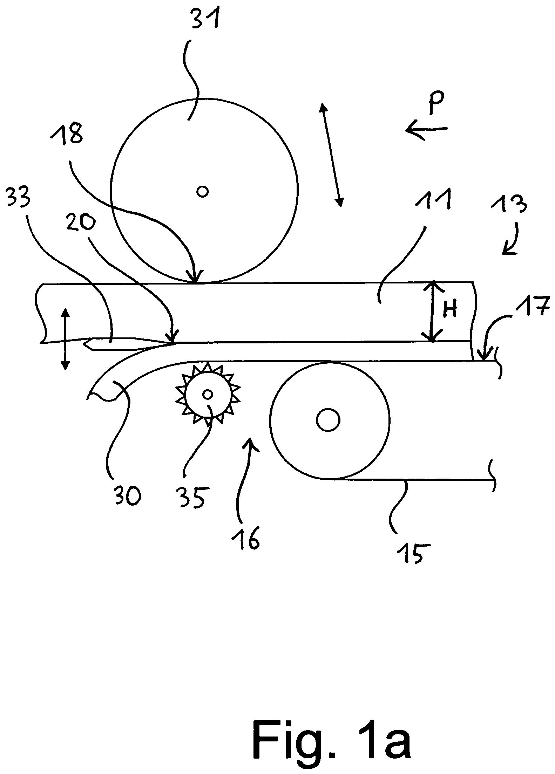

Gemäß Fig. 1 umfasst eine Abschwartungs- oder Entfettungsmaschine für Fleischprodukte eine Abtragungswalze 10, mittels welcher eine Oberflächenschicht 30 wie eine Fettauflage von einem Fleischprodukt 11 abgetragen werden kann. Die Abtragungswalze 10 weist zu diesem Zweck eine Zahnung 12 auf. Z.B. kann die Abtragungswalze 10 eine Vielzahl von nebeneinander längs einer Rotationsachse R der Abtragungswalze 10 angeordneten Scheiben umfassen, an deren Umfang jeweils Zähne ausgebildet sind.

Eine Produktzuführung 13 dient dazu, das Fleischprodukt 11 entlang einer Produktförderrichtung P der Abtragungswalze 10 zuzuführen. Die Produktzuführung 13 umfasst zwei angetriebene, hintereinander angeordnete Bandförderer 15, auf welchen das Fleischprodukt 11 aufliegt. Alternativ oder zusätzlich zu den Bandförderern 15 können weitere Mechanismen zum Bewirken des Produktvorschubs vorgesehen sein. Die Abtragungswalze 10 ist um die rechtwinklig zu der Produktförderrichtung P verlaufende Rotationsachse R drehbar und in einer Unterbrechung 16 zwischen den beiden Bandförderern 15 angeordnet. Dadurch kann die Abtragungswalze 10 mit der Unterseite des Fleischprodukts 11 in Eingriff gelangen. Um unterschiedlich dicke Oberflächenschichten 30 von der Unterseite des Fleischprodukts 11 abtragen zu können, ist die Abtragungswalze 10 relativ zu den in einer gemeinsamen Ebene befindlichen Auflageflächen 17 der Bandförderer 15 höhenverstellbar, was in Fig. 1 durch einen Doppelpfeil dargestellt ist. Diese Höheneinstellung erfolgt vorzugsweise vor dem eigentlichen Abtragungsvorgang, d.h. bezüglich der Höhe ist die Abtragungswalze 10 während des Abtragungsvorgangs relativ zu den Auflageflächen feststehend angeordnet. Alternativ kann aber vorgesehen sein, dass die Abtragungswalze 10 auch während des Abtragungsvorgangs in der Höhe verstellbar ist, und zwar im Hinblick bzw. in Abhängigkeit von der Kontur des Produktes 11. In dem hier beschriebenen Ausführungsbeispiel ist es aber eine nachstehend näher beschriebene Gegenfläche der Produktzuführung, die in Abhängigkeit von der Produktkontur relativ zu der feststehenden Abtragungswalze 10 verstellbar ist.

Die Produktzuführung 13 umfasst ferner eine Andrückvorrichtung in Form einer Andrückwalze 31, welche vorzugsweise eine in Fig. 1 nicht dargestellte Riffelung aufweist. Die Andrückwalze 31 drückt das Fleischprodukt 11 mit einer produktseitigen Gegenfläche 18 nach unten gegen die Auflageflächen 17 der Bandförderer 15 sowie gegen eine produktseitige Wirkfläche 20 der Abtragungswalze 10. Da die Andrückwalze 31 um eine parallel zu der Rotationsachse R der Abtragungswalze 10 verlaufende Rotationsachse drehbar angetrieben ist, bildet sie auch eine Förderwalze zur Unterstützung des Produktvorschubs. Eine solche Förderfunktion ist aber für die Andruckwalze 31 nicht zwingend, d.h. die Andruckwalze 31 bildet auch als nicht für den Vorschub des Produktes 11 sorgende Komponente einen Bestandteil der Produktzuführung 13.

Im Verlauf des Transports auf den Bandförderern 15 gelangt das Fleischprodukt 11 zwischen die Andrückwalze 31 und die Abtragungswalze 10, sodass das Fleischprodukt 11 mit einer Komponente senkrecht zu der Produktförderrichtung P gegen die Abtragungswalze 10 gedrückt wird. Die Kraft, mit welcher die Abtragungswalze 10 gegen die Unterseite des Fleischprodukts 11 drückt bzw. mit welcher das Produkt 11 mittels der Andrückwalze 31 gegen die Abtragungswalze 10 gedrückt wird, hängt von dem Verhältnis zwischen der Produkthöhe H und der lichten Weite W zwischen der Abtragungswalze 10 und der Andrückwalze 31, d.h. zwischen der Wirkfläche 20 der Abtragungswalze 10 und der Gegenfläche 18 der Andrückwalze 31 ab.

Wie aus Fig. 1 hervorgeht, weist das Fleischprodukt 11 eine unregelmäßige Kontur auf, sodass ohne weitere Maßnahmen die Produkthöhe H und folglich die Andruckkraft der Abtragungswalze 10 während des Abtragungsvorgangs variieren würde.

Um dennoch eine gleichmäßige Andruckkraft während des gesamten Abtragungsvorgangs zu gewährleisten, ist eine Stellvorrichtung 19 vorgesehen, mittels welcher die Andrückwalze 31 aktiv gehoben und gesenkt werden kann, um so deren Abstand zu der Abtragungswalze 10 in Abhängigkeit von der Produktkontur aktiv zu verändern.

Um die Kontur des Fleischprodukts 11 zu ermitteln, ist ein Ultraschallsensor 21 vorgesehen, welcher kontinuierlich den Abstand von der Produktoberfläche erfasst und diesen an eine elektronische Steuereinheit 23 übermittelt. Die Steuereinheit 23 steuert in Abhängigkeit von dem empfangenen Abstandssignal einen motorischen Stellantrieb 25, bei dem es sich beispielsweise um einen Servomotor handeln kann. Mittels des Stellantriebs 25 kann ein Stellkolben 27 aus- und eingefahren werden, welcher an einem Ende eines Schwenkarms 29 angreift, an welchem auch die Andrückwalze 31 gelagert ist. Der Schwenkarm 29 ist an seinem anderen Ende an einem ortsfesten Bezugspunkt der Produktzuführung 13 schwenkbar gelagert, was in Fig. 1 nicht im Einzelnen dargestellt ist. Durch ein Ausfahren des Stellkolbens 27 kann der Schwenkarm 29 nach oben geschwenkt werden, wodurch sich die Andrückwalze 31 gegenüber den Auflageflächen 17 sowie der Abtragungswalze 10 anhebt. Umgekehrt kann durch Einfahren des Stellkolbens 27 der Schwenkarm 29 nach unten geschwenkt werden, wodurch sich die Andrückwalze 31 gegenüber den Auflageflächen 17 senkt.

Die Steuereinheit 23 regelt den Stellantrieb 25 derart, dass die Andrückwalze 31 kontinuierlich während des gesamten Abtragungsvorgangs der Kontur des Fleischprodukts 11 nachgeführt wird, also aktiv an der Oberseite des Fleischprodukts 11 entlang geführt wird. Durch dieses aktive Nachführen der Andrückwalze 31 kann trotz einer unregelmäßigen Produktkontur eine gleichbleibende Andruckkraft und somit eine gleichbleibende Qualität der mittels der Abtragungswalze 10 erfolgenden Abtragung aufrechterhalten werden. Als weiterer Vorteil des gesteuerten Nachführens ergibt sich, dass abgesehen von dem Nachführprozess auch der Basiswert der Andruckkraft der Abtragungswalze 10 bei Bedarf verändert werden kann, um so zum Beispiel einer unterschiedlichen Dicke oder Konsistenz verschiedener Fleischprodukte 11 Rechnung zu tragen.

Eine in Fig. 1a dargestellte zweite Ausführungsform der Erfindung sieht vor, dass anstelle einer rotierenden Abtragungswalze ein Messer oder eine Klinge 33 zum Abschwarten bzw. Entfetten eines Fleischprodukts 11 eingesetzt wird. Um das Fleischprodukt 11 sicher und zuverlässig gegen die Klinge 33 zu treiben, ist zusätzlich zu den Bandförderern 15 - von denen in Fig. 1a lediglich einer dargestellt ist - eine Fördereinrichtung 35 in Form einer Zuführwalze vorgesehen, welche der Klinge 33 in Produktförderrichtung P gesehen unmittelbar vorgelagert ist.

Die Anordnung aus Klinge 33 und Zuführwalze 35 ist wie die in Fig. 1 dargestellte Abtragungswalze in einer Unterbrechung 16 zwischen den beiden Bandförderern 15 angeordnet, sodass sich also die Klinge 33 und die Zuführwalze 35 unterhalb des Fleischproduktes 11 befinden. Um unterschiedlich dicke Oberflächenschichten 30 von der Unterseite des Fleischprodukts 11 abtragen zu können, ist die Klinge 33 relativ zu den Auflageflächen 17 der Bandförderer 15 höhenverstellbar, was in Fig. 1a durch einen Doppelpfeil dargestellt ist. Sollte es die Anwendung erfordern, so kann auch die Zuführwalze 35 höhenverstellbar sein.

Die Klinge 33 trennt die Oberflächenschicht 30 vom Fleischprodukt 11 ab. Hierbei bleibt die Klinge 33 im Wesentlichen feststehend, d.h. es findet keine Rotationsbewegung wie bei der Abtragungswalze 10 gemäß Fig. 1 statt. Sollte es anwendungsbedingt erforderlich sein, so könnte jedoch eine Höhenverstellung der Klinge 33 während des Betriebs der Entfettungsmaschine erfolgen. Eine derartige Höhenverstellung der Klinge 33 ist jedoch für die Einstellung der Andrückkraft nicht maßgeblich. Die abgetrennte Oberflächenschicht 30 gelangt nach unten in ein geeignetes, nicht dargestelltes Auffangbehältnis, wobei im Bereich der Klinge 33 eine Vorrichtung angeordnet sein kann, welche das Ablenken der abgetrennten Oberflächenschicht 30 nach unten unterstützt.

Eine Andrückwalze 31 drückt das Fleischprodukt 11 analog zu der ersten Ausführungsform gemäß Fig. 1 mit einer produktseitigen Gegenfläche 18 nach unten gegen die Klinge 33 und die Zuführwalze 35. Die Andrückwalze 31 wird wiederum kontinuierlich während des gesamten Abtragungsvorgangs der Kontur des Fleischprodukts 11 nachgeführt, um eine gleichmäßige Andruckkraft während des gesamten Abtragungsvorgangs zu gewährleisten. Die Verstellung der Andrückwalze 31 erfolgt dabei in gleicher Weise wie bei der Vorrichtung gemäß Fig. 1, wobei die Stellvorrichtung in Fig. 1a zur Vereinfachung weggelassen ist.

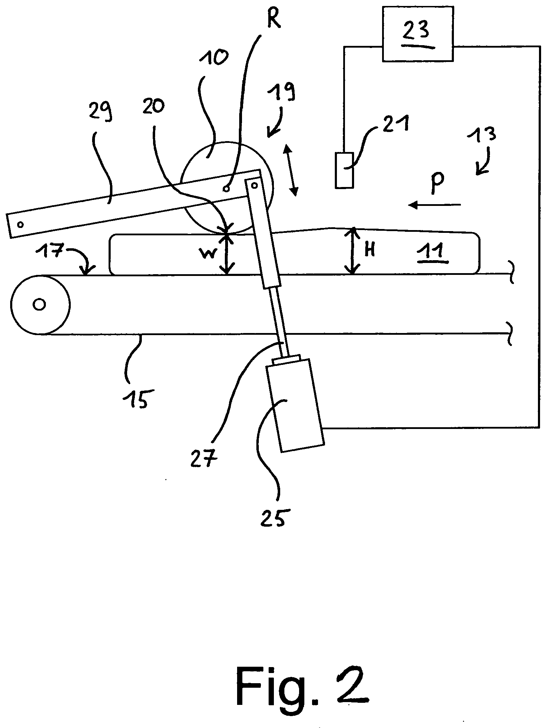

Gemäß dem in Fig. 2 dargestellten weiteren Ausführungsbeispiel umfasst eine Entfettungsmaschine für Fleischprodukte eine Abtragungswalze 10, welche oberhalb der Auflagefläche 17 für das Fleischprodukt 11 angeordnet ist. Die Abtragungswalze 10 kann eine geeignete Riffelung aufweisen, was in Fig. 2 nicht dargestellt ist. Eine Produktzuführung 13 dient dazu, das Fleischprodukt 11 entlang einer Produktförderrichtung P der Abtragungswalze 10 zuzuführen. Die Produktzuführung 13 umfasst hierzu einen angetriebenen Bandförderer 15, auf welchem das Fleischprodukt 11 aufliegt. Alternativ oder zusätzlich zu dem Bandförderer 15 können weitere Mechanismen zum Bewirken des Produktvorschubs vorgesehen sein. Die Abtragungswalze 10 ist um eine rechtwinklig zu der Produktförderrichtung P verlaufende Rotationsachse R drehbar.

Im Verlauf des Transports auf dem Bandförderer 15 gelangt das Fleischprodukt 11 zwischen die Auflagefläche 17 des Bandförderers 15 und die Abtragungswalze 10, sodass das Fleischprodukt 11 mit einer Komponente senkrecht zu der Produktförderrichtung P gegen die Abtragungswalze 10 gedrückt wird. Die Kraft, mit welcher die Abtragungswalze 10 gegen die Oberseite des Fleischprodukts 11 drückt, hängt von dem Verhältnis zwischen der Produkthöhe H und der lichten Weite W zwischen der Abtragungswalze 10 und der Auflagefläche 17 ab. Wie aus Fig. 2 hervorgeht, weist das Fleischprodukt 11 eine unregelmäßige Kontur auf, sodass ohne weitere Maßnahmen die Produkthöhe H und folglich die Andruckkraft der Abtragungswalze 10 während des Abtragungsvorgangs variieren würde.

Um dennoch eine gleichmäßige Andruckkraft während des gesamten Abtragungsvorgangs zu gewährleisten, ist eine Stellvorrichtung 19 vorgesehen, mittels welcher die Abtragungswalze 10 aktiv gehoben und gesenkt werden kann, um so den Abstand zwischen der produktseitigen Wirkfläche 20 der Abtragungswalze 10 und der Auflagefläche 17 des Bandförderers 15 in Abhängigkeit von der Produktkontur aktiv zu verändern. Um die Kontur des Fleischprodukts 11 zu ermitteln, ist ein Ultraschallsensor 21 vorgesehen, welcher kontinuierlich den Abstand von der Produktoberfläche erfasst und diesen an eine elektronische Steuereinheit 23 übermittelt. Die Steuereinheit 23 steuert in Abhängigkeit von dem empfangenen Abstandssignal einen motorischen Stellantrieb 25, bei dem es sich beispielsweise um einen Servomotor handeln kann. Mittels des Stellantriebs 25 kann ein Stellkolben 27 aus- und eingefahren werden, welcher an einem Ende eines Schwenkarms 29 angreift, an welchem auch die Abtragungswalze 10 gelagert ist. Der Schwenkarm 29 ist an seinem anderen Ende an einem ortsfesten Bezugspunkt der Produktzuführung 13 schwenkbar gelagert, was in Fig. 2 nicht im Einzelnen dargestellt ist. Durch ein Ausfahren des Stellkolbens 27 kann der Schwenkarm 29 nach oben geschwenkt werden, wodurch sich die Abtragungswalze 10 gegenüber der Auflagefläche 17 anhebt. Umgekehrt kann durch Einfahren des Stellkolbens 27 der Schwenkarm 29 nach unten geschwenkt werden, wodurch sich die Abtragungswalze 10 gegenüber der Auflagefläche 17 senkt. Die Steuereinheit 23 regelt den Stellantrieb 25 derart, dass die Abtragungswalze 10 kontinuierlich während des gesamten Abtragungsvorgangs der Kontur des Fleischprodukts 11 nachgeführt wird, also aktiv an der Oberseite des Fleischprodukts 11 entlang geführt wird. Durch dieses aktive Nachführen der Abtragungswalze 10 kann trotz einer unregelmäßigen Produktkontur eine gleichbleibende Andruckkraft und somit eine gleichbleibende Qualität der Abtragung aufrechterhalten werden. Als weiterer Vorteil des gesteuerten Nachführens ergibt sich, dass abgesehen von dem Nachführprozess auch der Basiswert der Andruckkraft der Abtragungswalze 10 bei Bedarf verändert werden kann, um so zum Beispiel einer unterschiedlichen Dicke oder Konsistenz verschiedener Fleischprodukte 11 Rechnung zu tragen.

Bei allen dargestellten Ausführungsbeispielen erfasst der Ultraschallsensor 21 in Produktförderrichtung P gesehen vor der Abtragungswalze 10 punkt- oder linienweise die Kontur des Fleischprodukts 11. Alternativ könnte auch eine Konturerfassungseinrichtung vorgesehen sein, welche die Kontur des gesamten Fleischprodukts 11 vor dem Beginn des Abtragungsvorgangs ermittelt. Eine derartige Konturerfassungseinrichtung könnte auch an einer anderen Stelle der Entfettungsmaschine angeordnet sein oder die Entfettungsmaschine könnte Teil einer größeren Produktionslinie sein und von einer anderen Vorrichtung die Konturdaten empfangen.

Wie eingangs bereits erwähnt, kann die Abstandserfassung alternativ auf optischem Wege erfolgen. Beispielsweise kann eine optische Erfassungseinrichtung vorgesehen sein, die auf dem Triangulationsprinzip bzw. auf dem Lichtschnittverfahren beruht. Es kann insbesondere wenigstens ein Linienprojektor - vorzugsweise mit einem Laser als Lichtquelle - in Verbindung mit wenigstens einer Kamera zur Beobachtung der projizierten Linie auf dem Produkt eingesetzt werden, um so über den Linienversatz die Produktkontur zu ermitteln. Eine weitere Möglichkeit zur berührungslosen Konturerfassung ist die Verwendung eines Röntgenscanners, welcher in der Lage ist, die innere Struktur eines Produkts anhand von Dichteunterschieden zu ermitteln. Aus dieser umfassenden Strukturinformation kann der auf die Außenkontur bezogene Anteil extrahiert werden.

### Bezugszeichenliste

- 10: Abtragungswalze
- 11: Fleischprodukt
- 12: Zahnung
- 13: Produktzuführung
- 15: Bandförderer
- 16: Unterbrechung
- 17: Auflagefläche
- 18: Gegenfläche
- 19: Stellvorrichtung
- 20: Wirkfläche
- 21: Ultraschallsensor
- 23: Steuereinheit
- 25: Stellantrieb
- 27: Stellkolben
- 29: Schwenkarm
- 30: Oberflächenschicht
- 31: Andrückvorrichtung, Andrückwalze
- 33: Messer, Klinge
- 35: Fördereinrichtung, Zuführwalze

- P: Produktförderrichtung
- R: Rotationsachse
- H: Produkthöhe
- W: lichte Weite

## Patentansprüche

1. Vorrichtung zum Abtragen einer Oberflächenschicht von Lebensmittelprodukten, mit
einer Produktzuführung (13), die ein zu verarbeitendes Produkt (11) entlang einer Produktförderrichtung (P) derart einem Abtragungswerkzeug (10) zuführt, dass das Produkt (11) mit einer Komponente senkrecht zur Produktförderrichtung (P) gegen eine Wirkfläche (20) des Abtragungswerkzeugs (10) gedrückt wird,
wobei die Relativposition zwischen der Produktzuführung (13) und dem Abtragungswerkzeug (10) mittels einer Stellvorrichtung (19) verstellbar ist, und wobei eine der Stellvorrichtung (19) zugeordnete Steuereinheit (23) dazu ausgebildet ist, die Relativposition zwischen der Produktzuführung (13) und dem Abtragungswerkzeug (10) in Abhängigkeit von der Kontur des Produkts (11) zu verstellen, **dadurch gekennzeichnet, dass**
die Steuereinheit (23) dazu ausgebildet ist, eine Gegenfläche (18) der Produktzuführung (13) während des Abtragungsvorgangs fortlaufend der Kontur des Produkts (11) nachzuführen.

2. Vorrichtung nach Anspruch 1,
**dadurch gekennzeichnet, dass**
die Relativposition zwischen der Gegenfläche (18) der Produktzuführung (13) und dem Abtragungswerkzeug (10) verstellbar ist.

3. Vorrichtung nach zumindest einem der vorstehenden Ansprüche, **dadurchgekennzeichnet, dass**
die Relativposition zwischen einer Andrückvorrichtung (31) und einer Produktauflagefläche (17) der Produktzuführung (13) verstellbar ist.

4. Vorrichtung nach zumindest einem der vorstehenden Ansprüche, **dadurchgekennzeichnet, dass**
die Produktzuführung (13) eine Andrückvorrichtung (31) umfasst, die dazu ausgebildet ist, das Produkt (11) gegen eine Produktauflagefläche (17) der Produktzuführung (13) zu drücken.

5. Vorrichtung nach zumindest einem der vorstehenden Ansprüche, **dadurchgekennzeichnet, dass**
das Abtragungswerkzeug (10) bezüglich der Verstellrichtung relativ zu einer Produktauflagefläche (17) der Produktzuführung (13) feststehend angeordnet ist.

6. Vorrichtung nach zumindest einem der vorstehenden Ansprüche, **gekennzeichnet durch**
eine mit der Steuereinheit (23) in Verbindung stehende, insbesondere berührungslos arbeitende, Erfassungseinrichtung (21) zum Ermitteln der Kontur des Produkts (11).

7. Vorrichtung nach zumindest einem der vorstehenden Ansprüche, **dadurchgekennzeichnet, dass**
das Abtragungswerkzeug (10) ein Entfettungs-, Enthäutungs- und/oder Entschwartungswerkzeug umfasst.

8. Vorrichtung nach zumindest einem der vorstehenden Ansprüche, **dadurchgekennzeichnet, dass**
das Abtragungswerkzeug (10) wenigstens eine um eine quer zur Produktförderrichtung (P) verlaufende Rotationsachse (R) drehbare Walze umfasst, oder dass das Abtragungswerkzeug (10) wenigstens ein Messer oder eine Klinge (33) umfasst.

9. Vorrichtung nach zumindest einem der vorstehenden Ansprüche, **dadurchgekennzeichnet, dass**
die Stellvorrichtung (19) einen motorischen Stellantrieb (25) umfasst.

10. Vorrichtung nach zumindest einem der vorstehenden Ansprüche, **dadurchgekennzeichnet, dass**
eine Andrückvorrichtung (31) der Produktzuführung (13) an einem Schwenkarm (29) angebracht ist, wobei durch ein Verschwenken des Schwenkarms (29) mittels der Stellvorrichtung (19) die Andrückvorrichtung (31) gegenüber einer Produktauflagefläche (17) der Produktzuführung (13) hebbar und senkbar ist.

11. Vorrichtung nach zumindest einem der vorstehenden Ansprüche, **dadurchgekennzeichnet, dass**
die Stellvorrichtung (19) dazu ausgebildet ist, die Relativposition zwischen der Produktzuführung (13) und dem Abtragungswerkzeug (10) ferner in Abhängigkeit von einer Beschaffenheit des Produkts (11) zu verstellen.

12. Verfahren zum Abtragen einer Oberflächenschicht von Lebensmittelprodukten, mit den Schritten:
Ermitteln einer Kontur eines zu verarbeitenden Produkts (11),
Zuführen des Produkts (11) entlang einer Produktförderrichtung (P) einem Abtragungswerkzeug (10) derart, dass das Produkt (11) mit einer Komponente senkrecht zur Produktförderrichtung (P) gegen eine Wirkfläche (20) des Abtragungswerkzeugs (10) gedrückt wird,
Verstellen der Relativposition zwischen einer Produktzuführung (13), insbesondere einer Andrückvorrichtung (31), und dem Abtragungswerkzeug (10) mittels einer Stellvorrichtung (19) in Abhängigkeit von der ermittelten Kontur des Produkts (11), **dadurchgekennzeichnet, dass**
eine Gegenfläche (18) der Produktzuführung (13) während des Abtragungsvorgangs fortlaufend der Kontur des Produkts (11) nachgeführt wird.

13. Verfahren nach Anspruch 12,
**dadurchgekennzeichnet, dass**
die Position einer Andrückvorrichtung (31) der Produktzuführung (31) während des Abtragungsvorgangs der Kontur des Produkts (11) nachgeführt wird.

14. Verfahren nach Anspruch 12 oder 13,
**dadurchgekennzeichnet, dass**
die Kontur des gesamten Produkts (11) vor dem Beginn des Abtragungsvorgangs ermittelt wird, oder dass die Kontur des Produkts (11) punkt- oder abschnittsweise während des Abtragungsvorgangs ermittelt wird.

## Claims

1. An apparatus for removing a surface layer from food products comprising
a product feed (13) which feeds a product (11) to be processed along a product conveying direction (P) to a removal tool (10) such that the product (11) is pressed with a component perpendicular to the product conveying direction (P) against an operative surface (20) of the removal tool (10),
wherein the relative position between the product feed (13) and the removal tool (10) is adjustable by means of an adjustment apparatus (19); and wherein a control unit (23) associated with the adjustment apparatus (19) is adapted to adjust the relative position between the product feed (13) and the removal tool (10) in dependence on the contour of the product (11),
**characterized in that**
the control unit (23) is adapted to continuously adjust a counter surface (18) of the product feed (13) to follow the contour of the product (11) during the removal procedure.

2. An apparatus in accordance with claim 1,
**characterized in that**
the relative position between the counter surface (18) of the product feed (13) and the removal tool (10) is adjustable.

3. An apparatus in accordance with at least one of the preceding claims,
**characterized in that**
the relative position between a pressing apparatus (31) and a product support surface (17) of the product feed (13) is adjustable.

4. An apparatus in accordance with at least one of the preceding claims,
**characterized in that**
the product feed (13) includes a pressing apparatus (31) which is adapted to press the product (11) against a product support surface (17) of the product feed (13).

5. An apparatus in accordance with at least one of the preceding claims,
**characterized in that**
the removal tool (10) is arranged in a fixed position with respect to the adjustment direction relative to a product support surface (17) of the product feed (13).

6. An apparatus in accordance with at least one of the preceding claims,
**characterized by**
a detection device (21) connected to the control unit (23) and in particular working in a contactless manner for determining the contour of the product (11).

7. An apparatus in accordance with at least one of the preceding claims,
**characterized in that**
the removal tool (10) includes a tool for defatting, skinning and/or derinding.

8. An apparatus in accordance with at least one of the preceding claims,
**characterized in that**
the removal tool (10) includes at least one roller rotatable about an axis of rotation (R) extending transversely to the product conveying direction (P); or **in that** the removal tool (10) includes at least one knife or one blade (33).

9. An apparatus in accordance with at least one of the preceding claims,
**characterized in that**
the adjustment apparatus (19) includes a motorized actuating drive (25).

10. An apparatus in accordance with at least one of the preceding claims,
**characterized in that**
a pressing apparatus (31) of the product feed (13) is attached to a pivot arm (29), with the pressing apparatus (31) being able to be raised and lowered with respect to a product support surface (17) of the product feed (13) by a pivoting of the pivot arm (29) by means of the adjustment apparatus (19).

11. An apparatus in accordance with at least one of the preceding claims,
**characterized in that**
the adjustment apparatus (19) is adapted to adjust the relative position between the product feed (13) and the removal tool (10) also in dependence on a quality of the product (11).

12. A method for removing a surface layer from food products comprising the steps:
determining a contour of a product (11) to be processed;
feeding the product (11) along a product conveying direction (P) to a removal tool (10) such that the product (11) is pressed with a component perpendicular to the product conveying direction (P) against an operative surface (20) of the removal tool (10); and
adjusting the relative position between a product feed (13), in particular a pressing apparatus (31), and the removal tool (10) by means of an adjustment apparatus (19) in dependence on the determined contour of the product (11),
**characterized in that**
a counter surface (18) of the product feed (13) is continuously adjusted to follow the contour of the product (11) during the removal procedure.

13. A method in accordance with claim 12,
**characterized in that**
the position of a pressing apparatus (31) of the product feed (13) is adjusted to follow the contour of the product (11) during the removal procedure.

14. A method in accordance with claim 12 or claim 13,
**characterized in that**
the contour of the total product (11) is determined before the start of the removal procedure; or **in that** the contour of the product (11) is determined in a point-wise or section-wise manner during the removal procedure.

## Revendications

1. Dispositif pour enlever une couche de surface à partir de produits alimentaires, comprenant
une amenée de produit (13) qui amène un produit à traiter (11) le long d'une direction de convoyage de produit (P) à un outil d'enlèvement (10) de telle façon que le produit (11) est pressé contre une surface active (20) de l'outil d'enlèvement (10) avec une composante perpendiculaire à la direction de convoyage de produit (P),
dans lequel la position relative entre l'amenée de produit (13) et l'outil d'enlèvement (10) est réglable au moyen d'un dispositif de positionnement (19), et dans lequel une unité de commande (23) associée au dispositif de positionnement (19) est réalisée pour régler la position relative entre l'amenée de produit (13) et l'outil d'enlèvement (10) en fonction du contour du produit (11),
**caractérisé en ce que**
l'unité de commande (23) est réalisée pour réajuster une surface antagoniste (18) de l'amenée de produits (13) pendant le processus d'enlèvement en suivant en continu le contour du produit (11).

2. Dispositif selon la revendication 1,
**caractérisé en ce que** la position relative entre la surface antagoniste (18) de l'amenée de produit (13) et l'outil d'enlèvement (10) est réglable.

3. Dispositif selon l'une au moins des revendications précédentes, **caractérisé en ce que** la position relative entre un dispositif de pressage (31) et une surface de pose de produit (17) de l'amenée de produit (13) est réglable.

4. Dispositif selon l'une au moins des revendications précédentes, **caractérisé en ce que** l'amenée de produit (13) inclut un dispositif de pressage (31) qui est réalisé pour presser le produit (11) contre une surface de pose de produit (17) de l'amenée de produit (13).

5. Dispositif selon l'une au moins des revendications précédentes, **caractérisé en ce que** l'outil d'enlèvement (10) est agencé de façon stationnaire, par référence à la direction de réglage, relativement à une surface de pose de produit (17) de l'amenée de produit (13).

6. Dispositif selon l'une au moins des revendications précédentes, **caractérisé par** un système de détection (21), en liaison avec l'unité de commande (23) et fonctionnant en particulier sans contact, pour déterminer le contour du produit (11).

7. Dispositif selon l'une au moins des revendications précédentes, **caractérisé en ce que** l'outil d'enlèvement (10) inclut un outil de dégraissage, un outil de pelage et/ou un outil de découennage.

8. Dispositif selon l'une au moins des revendications précédentes, **caractérisé en ce que** l'outil d'enlèvement (10) inclut au moins un cylindre capable de rotation autour d'un axe de rotation (R) qui s'étend perpendiculairement à la direction de convoyage de produit (P), et/ou **en ce que** l'outil d'enlèvement (10) inclut au moins un couteau ou une lame (33).

9. Dispositif selon l'une au moins des revendications précédentes, **caractérisé en ce que** le dispositif de positionnement (19) inclut un entraînement de positionnement motorisé (25).

10. Dispositif selon l'une au moins des revendications précédentes, **caractérisé en ce qu'**un dispositif de pressage (31) de l'amenée de produit (13) est rapporté sur un bras pivotant (29) et, par pivotement du bras pivotant (29) au moyen du dispositif de positionnement (19), le dispositif de pressage (31) est susceptible d'être levé et abaissé par rapport à une surface de pose de produit (17) de l'amenée de produit (13).

11. Dispositif selon l'une au moins des revendications précédentes, **caractérisé en ce que** le dispositif de positionnement (19) est réalisé pour régler la position relative entre l'amenée de produit (13) et l'outil d'enlèvement (10) en outre en fonction d'une propriété du produit (11).

12. Procédé pour enlever une couche de surface à partir de produits alimentaires, comprenant les étapes consistant à :
déterminer un contour d'un produit à traiter (11), amener le produit (11) le long d'une direction de convoyage de produit (P) à un outil d'enlèvement (10) de telle façon que le produit (11) est pressé contre une surface active (20) de l'outil d'enlèvement (10) avec une composante perpendiculaire à la direction de convoyage de produit (P), régler la position relative entre une amenée de produit (13), en particulier un dispositif de pressage (31), et l'outil d'enlèvement (10) au moyen d'un dispositif de positionnement (19) en fonction du contour déterminé du produit (11),
**caractérisé en ce qu'**une surface antagoniste (18) de l'amenée de produit (13) est réajustée pendant le processus d'enlèvement en suivant en continu le contour du produit (11).

13. Procédé selon la revendication 12,
**caractérisé en ce que** la position d'un dispositif de pressage (31) de l'amenée de produit (31) est réajustée pendant le processus d'enlèvement en suivant le contour du produit (11).

14. Procédé selon la revendication 12 ou 13,
**caractérisé en ce que** le contour de la totalité du produit (11) est déterminée avant de commencer le processus d'enlèvement, et/ou **en ce que** le contour du produit (11) est déterminée de façon ponctuelle ou portion par portion pendant le processus d'enlèvement.
